# EUROPÄISCHE PATENTSCHRIFT

(11) **EP 1 002 204 B1**
(45) Veröffentlichungstag und Bekanntmachung des Hinweises auf die Patenterteilung: **23.03.2005**
(21) Anmeldenummer: 99927799.9
(22) Anmeldetag: 29.05.1999
(51) Int. Cl.: F16J 15/02

(54) **MOOSGUMMIPROFIL, INSBESONDERE DICHTUNGSPROFIL ZUR ABDICHTUNG ZWEIER GEGENEINANDER GESTOSSENER FORMTEILE**
FOAM RUBBER PROFILE, ESPECIALLY SEALING PROFILE, FOR SEALING TWO MOULDED PARTS PUSHED AGAINST EACH OTHER
PROFILE EN CAOUTCHOUC CELLULAIRE, NOTAMMENT PROFILE D'ETANCHEITE SERVANT A ETANCHEIFIER DEUX PIECES MOULEES PLAQUEES L'UNE CONTRE L'AUTRE

(30) Priorität: 15.06.1998 DE 29810707 U
(43) Veröffentlichungstag der Anmeldung: 24.05.2000
(73) Patentinhaber: Meteor Gummiwerke K.H. Bädje GmbH & Co. KG., 31167 Bockenem (DE)
(72) Erfinder: RANZAU, Heiko, D-31167 Bockenem (DE); SCHAPER, Karin, D-31167 Bockenem (DE)
(74) Vertreter: Sobisch, Peter, Dipl.-Ing.
(86) Internationale Anmeldenummer: PCT/EP1999/003736
(87) Internationale Veröffentlichungsnummer: WO 1999/066233

(56) Entgegenhaltungen:
- DE-U- 9 106 181
- GB-A- 1 545 511
- US-A- 4 513 044
- US-A- 4 998 946
- US-A- 5 087 488

## Beschreibung

Die Erfindung bezieht sich auf ein Moosgummiprofil entsprechend dem Oberbegriff des Anspruchs 1, insbesondere auf ein Dichtungsprofil zum Abdichten zweier zusammenwirkender Körper.

Aus der Praxis, die in der Zeitschrift "Kautschuk + Gummi Kunststoffe" (Dr. Alfred Hüthig Verlag GmbH, Heidelberg, Deutschland) No. 1/91, Beitrag "Elastomer-Dichtungssysteme in Kraftfahrzeug-Karosserien, Ziffer 5.1.3, beschrieben ist, ist bekannt, bei der Abdichtung von Streuscheiben gegenüber einem Lampengehäuse schwarze, im Querschnitt trapezförmige, ovale oder runde Moosgummidichtschnüre zu verwenden, die aus einem EPDM-Extrusionsprofil zu einem Ring konfektioniert sind. Darüber hinaus werden Moosgummiprofile in vielfältiger Weise, u.a. als Puffer für Stoßkanten, verwendet. Häufig werden solche schwarzen Moosgummiprofile als ästhetisch störend empfunden.

Ein solches Moosgummiprofil ist aus dem DE 91 06 181 U1 bekannt. Es besteht durchgängig aus dem gleichen (schwarzen) Moosgummi und weist einen Fußabschnitt und eine, einen Profilkopf bildende Basisstruktur auf, zwischen denen sich ein Verbindungsabschnitt befindet. Der im Querschnitt halbkreisförmige Profilkopf ist mit durchgehenden Dichtrippen versehen, die sich bei entspanntem Profilkopf radial nach außen erstrecken.

Aus der GB 1 545 511 A, Fig. 10 ist es bekannt, die äußere Schicht eines im Querschnitt U-förmigen Aufsteckprofils aus billigem EPDM oder dergleichen Polymeren mit bis zu 60 % Füllstoffen und eingebetteter Armierung durch Koextrusion mit einer dünnen, andersfarbigen Deckschicht aus sehr teurem PVC/Nitril- oder HYPALON (R.T.M.)-Polymeren und einem, sich von einem Schenkel des Aufsteckprofils erstreckenden schlauchförmigen Dichtungsprofil, das z.B. aus geschlossenzelligem Schaumgummi bestehen kann, herzustellen.

Aus der US 4 513 044 A, Fig.3 und 4, ist es bekannt, ein letztlich im Querschnitt U-förmiges Aufsteckprofil aus schwarzem Weichgummi, ein sich von einem Schenkel des Aufsteckprofils erstreckendes, schlauchförmiges Dichtungsprofil aus schwarzem Schaumgummi und eine einen Teil der Außenfläche des Aufsteck- und des Dichtungsprofils überdeckende Schicht aus andersfarbigem Weichgummi zu koextrudieren.

Die US 5 087 488 A zeigt als bekannt eine Zierleiste, die aus einem Grundkörper aus einem ersten, billigen thermoplastischen Material, wie z.B. PVC oder PE, und einer andersfarbigen Deckschicht aus einem zweiten teureren thermoplastischen Material, z. B. PP, koextrudiert ist.

Die Verwendung von Ruß als aktiver Füllstoff bei Elastomeren zwecks Erzielung bestimmter Eigenschaften ist allgemein bekannt, so auch bei Moosgummi und es ist die Wirkungsweise von Rußpartikeln sehr weitgehend erforscht und beherrschbar. Diese Partikel zeichnen sich durch eine gute Verfügbarkeit und insbesondere geringe Kosten aus. Die Verwendung sonstiger Farbpartikel führt hingegen nicht zu den gewünschten technischen Eigenschaften und es gelten diese auch als verhältnismäßig teuer.

Der Erfindung liegt daher die Aufgabe zugrunde, ein Moosgummiprofil zur Verfügung zu stellen, welches bei zuverlässiger Erfüllung seiner bestimmungsgemäßen technischen Funktionen, beispielsweise des Abdichtens und der Stoßdämpfung kostengünstig auch in unterschiedlichen Farbtönen herstellbar ist. Gelöst ist diese Aufgabe bei einem solchen Moosgummiprofil durch die Merkmale des Kennzeichnungsteils des Anspruchs 1.

Erfindungsgemäß ist vorgesehen, dass das Moosprofil eine schwarze, rußpartikelhaltige Basisstruktur und eine einstückig mit der Basisstruktur ausgebildete, nicht schwarze, z. B. nach RAL-Farbtönen eingestellte Abdeckstruktur aufweist. Während die Basisstruktur die technischen Eigenschaften des Moosgummiprofils maßgeblich bestimmt, wird das ästhetische Erscheinungsbild durch die Farbe der Abdeckstruktur geprägt. Hierzu trägt die mittlere Schichtdicke der Abdeckstruktur von 1 mm bis 3 mm bei, welche mit der Maßgabe angelegt ist, dass die Druckverformungseigenschaften des gesamten Moosgummiprofils in deren Dickenrichtung nur geringfügig verändert werden. Das Moosgummiprofil weist somit Eigenschaften auf, die denjenigen eines an sich bekannten, zur Gänze schwarzen, rußpartikelhaltigen Profils entsprechen. Demgegenüber kann das erfindungsgemäße Abdeckprofil beispielsweise creme-weiß eingefärbt sein, nämlich mit Hinblick auf eine Verwendung in Scheinwerfergehäusen.

Das Moosgummiprofil ist nach Art eines Dichtungsprofils aufgebaut und weist einen Dichtungsabschnitt und an der einer Dichtungsfläche gegenüberliegenden Seite einen biegeweichen Verbindungsabschnitt sowie einen Fußabschnitt auf. Diese Konstruktion erlaubt es, das Dichtungsprofil einerseits auf eine Montage und Halterung hin und andererseits auf eine Dichtung hin zu optimieren, da der biegeweiche Verbindungsabschnitt verhindert, dass sich für die Dichtfunktion gewählte Dimensionierungen und Einstellungen negativ auf die Montage und Halterung auswirken. Während es nämlich für die Dichtfunktion ungünstig ist, das Dichtungsgummi schon bei der Montage in einer Einbaunut eines Leuchtengehäuses stark zu komprimieren, ist es für die Haltefunktion gerade erforderlich, mindestens bereichsweise eine hohe Haltekraft durch eine große Stauchung zu erreichen. In diesem Zusammenhang erweist es sich als besonders vorteilhaft, dass die Basisstruktur, die den Fußabschnitt umfasst, sich unabhängig von der Abdeckstruktur mit guten technischen Eigenschaften ausführen lässt.

Der biegeweiche Verbindungsabschnitt hat darüber hinaus den Vorteil, dass die der Abschlussscheibe gegenüberliegende Dichtfläche nicht abkippt, wenn beispielsweise die auch als Dichtungsbett bezeichnete Einbaunut fertigungsbedingt ungleichmäßig ausgebildet ist. Der biegeweiche Verbindungsabschnitt bietet die Möglichkeit, dass sich der Dichtabschnitt gut an das Dichtungsbett und die Abschlussscheibe anpasst, ohne dass gleichzeitig auf eine sichere Halterung verzichtet werden muss. Daher ist bei einer Verwendung des erfindungsgemäßen Dichtungsprofils auch bei komplexen Einbaugeometrien, die auch von der Abschlussscheibenebene weglaufende Ausschnitte aufweisen können, eine Verklebung nicht mehr erforderlich. Dadurch wird nicht nur der Montageaufwand verringert, sondern es wird auch ein späteres, sortenreines Recyclen erleichtert. Eine Gefahr, dass das Dichtungsprofil aus dem Dichtungsbett herausfallen könnte, besteht dabei nicht.

Der Fußabschnitt ist im Wesentlichen symmetrisch zu der im Profillängsrichtung und quer zur Dichtfläche verlaufenden Mittenebene ausgebildet. Dadurch wird die Montage erleichtert, da eine Kontrolle des Profils auf seine Längsorientierung hin entfallen kann.

Die Merkmale der Ansprüche 2 bis 5 sind auf eine vorteilhafte werkstoffliche Ausgestaltung der Abdeckstruktur sowie der Basisstruktur gerichtet.

Der Fußabschnitt weist federnd ausgebildete, zur Anlage in einer Einbaunut bestimmte, Halteleisten bildende Vorsprünge auf. An diesen Halteleisten sind Haltekuppen angeformt, die im nicht montierten Zustand seitlich über die Ebene der entsprechenden Anlagefläche des Dichtungsabschnittes des Dichtungsprofils hinausragen. Diese federnde Halteleisten werden bei der Montage stärker komprimiert als der Dichtabschnitt, so dass eine hohe Haltekraft erzielt wird. Die federnde Halteleiste sollte so ausgebildet sein, dass bei einer Zugkraft, die so gerichtet ist, dass sie das Dichtungsprofil aus dem Dichtungsbett zu ziehen droht, ein Herausziehen des Dichtungsprofils nur durch Umkrempeln der federnden Halteteiste möglich wäre.

Die Montage wird erleichtert, wenn die seitlichen Anlageflächen gegenüber der Mittenebene eine um 2° bis 10°, vorzugsweise um 4° größere Neigung aufweisen als die entsprechenden Wandabschnitte der Einbaunut gegenüber deren Mittenebene, und wenn die fußnahen Endbereiche des Dichtabschnitts eine geringere Breite aufweisen als der Abstand der entsprechenden, gegenüberliegenden Wandabschnitte der Einbaunut. Bei einer solchen Dimensionierung lässt sich das Dichtungsprofil leicht bis in den Grund der Einbaunut hineindrücken, selbst wenn Fertigungstoleranzen und Unebenheiten der Einbaunut vorhanden sind. Durch die starke Neigung der seitlichen Anlageflächen des Dichtabschnitts fügt sich das Dichtungsprofil quasi selbst ein. Darüber hinaus wird ein Ausgleichsvolumen zur Verfügung gestellt, so dass der Dichtabschnitt gegenüber bekannten Dichtschnüren nach der Montage in der Einbaunut eine geringere Vorverformung und damit bessere Dichteigenschaften aufweist.

Um eine gute Dichtwirkung zu gewährleisten, sollte der Dichtabschnitt gegenüber der Einbaunut im Bereich der Dichtfläche eine Weite aufweisen, die um weniger als 20%, vorzugsweise um weniger als 10% größer ist als die Breite der Einbaunut in diesem Bereich. Dadurch bleibt eine hohe Verformungskapazität des Dichtungsprofils im Bereich des Dichtabschnitts erhalten.

Zum Schutz gegen Feuchtigkeitsunterwanderung ist gemäß einer bevorzugten Ausführungsform der Erfindung vorgesehen, dass der Fußabschnitt auf der, der Dichtfläche gegenüberliegenden Seite eine Dichtnase aufweist. Diese Dichtnase sollte als Rippe mit zur Mittenebene schrägen Seitenwänden und abgerundeter Kuppe ausgebildet sein, so dass eine Verformung der Dichtnase leicht möglich ist und sich somit Fertigungstoleranzen im Grund der Einbaunut nicht negativ auf die Lage der der Abschlussscheibe gegenüberliegenden Dichtfläche auswirken können.

Weitere Ausgestaltungen der Erfindung ergeben sich aus der Zeichnung in Verbindung mit der Beschreibung . Es zeigt::

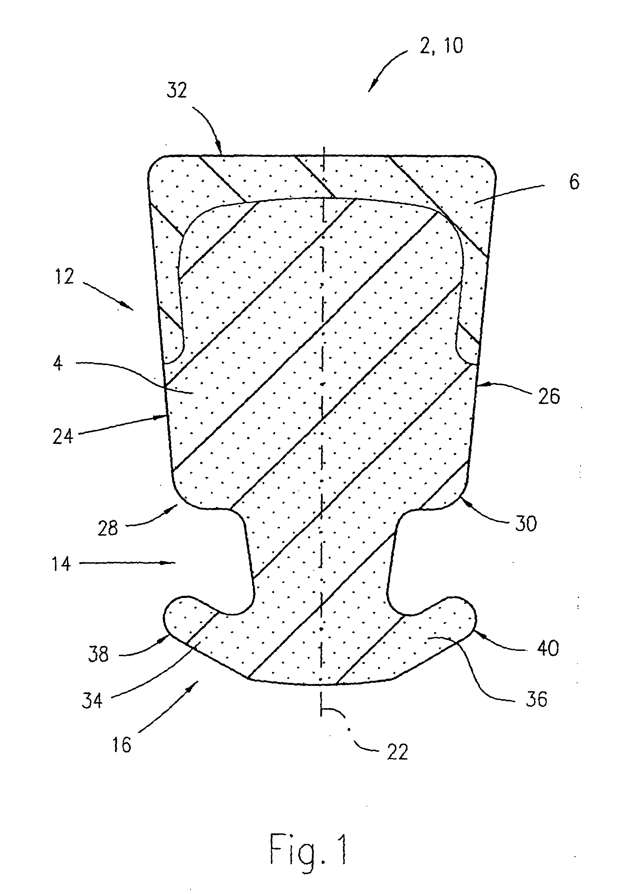

Fig. 1 eine bevorzugte Ausführungsform eines erfindungsgemäßen Moosgummiprofils im Querschnitt.

Das in Fig. 1 gezeigte Moosgummiprofil 2 ist als Duplexstrangprofil koextrudiert und weist eine Basisstruktur 4 aus schwarzem Moosgummi sowie eine Abdeckstruktur aus creme-weißfarbenem Moosgummi auf. Das Moosgummiprofil 2 ist als Dichtungsprofil 10 mit einem Dichtungsabschnitt 12, einem Verbindungsabschnitt 14 und einem Fußabschnitt 16 ausgebildet.

Der Dichtabschnitt 12 ist so gestaltet, dass er im Querschnitt längs zur Mittenebene 22 des Dichtungsprofils 10 eine Höhe von etwa 65% der Höhe des gesamten Dichtungsprofils aufweist, wobei seine seitlichen Anlageflächen 24, 26 eine Neigung zur Mittenebene 22 von etwa 5° aufweisen. Dadurch und durch Abrundungen 28, 30 im Übergangsbereich vom Dichtabschnitt 12 zum Verbindungsabschnitt 14 wird ein Einfädeln des Dichtabschnitts 12 beim Einbau des Dichtungsprofils 10 erleichtert und ein Kippen der Dichtfläche 32 im wesentlichen verhindert. Die Schichtdicke der Abdeckstruktur 6 beträgt im Bereich der Mittenebene 1.2 mm und nimmt zu den Kanten leicht zu.

An den Dichtabschnitt 12 schließt sich an dem der Dichtfläche 32 gegenüberliegenden Ende der Verbindungsabschnitt 14 an, der eine weit unter die Breite einer Einbaunut gehende Verjüngung darstellt. An seiner schmalsten Stelle weist der Verbindungsabschnitt 14 eine Breite auf, die nur etwa 38 % der größten Breite des Dichtabschnitts 12 entspricht. Dadurch ist der Verbindungsabschnitt biegeweich, so daß die Lage des sich an den Verbindungsabschnitt 14 anschließenden Fußabschnittes 16 ohne Einfluß auf die Lage des Dichtabschnitts 12 bleibt.

Der Fußabschnitt 16 weist gegenüber dem Verbindungsabschnitt 14 im Querschnitt senkrecht zur Mittenebene 22 eine um 100 % größere Breite auf. Dabei sind Vorsprünge 34, 36 des Fußabschnitts 16 als federnde, mindestens teilweise ein Anklappen erlaubende Halteleisten ausgebildet. Dadurch kommen seitliche Halteflächen 38, 40 in der Einbaunut so zur Anlage, daß ein Herausziehen des Dichtungsprofils 10 aus der Einbaunut nur unter Umkrempeln der seitlichen Vorsprünge 34, 36 möglich wäre.

## Patentansprüche

1. Moosgummiprofil, bestehend aus einer, rußpartikeihaltigen Basisstruktur (4) und einem Fußabschnitt (16), zwischen denen sich ein Verbindungsabschnitt (14) befindet, wobei das Profil nach Art eines Dichtungsprofils (10) zur Abdichtung zweier zusammenwirkender Körper, nämlich zur Abdichtung von Leuchtengehäusen gegenüber deren Abschlussscheiben ausgebildet ist, wobei der Fußabschnitt (16) zum Einsetzen in eine Einbaunut bestimmt, im Wesentlichen symmetrisch zur einer, in Profillängserstreckung verlaufenden Mittenebene (22) ausgebildet und mit jeweils Halteleisten bildenden Vorsprüngen (34, 36) versehen ist, **gekennzeichnet durch** eine, die Basisstruktur (4) kappenartig übergreifende, im Wege der Koextrusion zusammen mit der Basisstruktur (4) hergestellte, farbpartikelhaltige, nicht schwarze Abdeckstruktur (6), deren Schichtdicke mit 1,0 mm bis 3,0 mm gewählt ist, wobei die Breite des Verbindungsabschnitts (14) an seiner schmalsten Stelle etwa 38 % der größten Breite des Dichtabschnitts (12) beträgt und wobei die Höhe des Dichtabschnitts (12) etwa 65 % der gesamten Höhe des Dichtungsprofils (10) beträgt.

2. Moosgummiprofil nach Anspruch 1, **dadurch gekennzeichnet, dass** die Basisstruktur (4) eine Härte von 10 bis 25 Shore A aufweist

3. Moosgummiprofil nach einem der Ansprüche 1 oder 2, **dadurch gekennzeichnet, dass** die Basisstruktur (4) eine Härte von vorzugsweise 20 Shore A aufweist und das die Dicke der Abdeckstruktur (6) vorzugsweise 1,5 mm beträgt.

4. Moosgummiprofil nach einem der Ansprüche 1 bis 3, **dadurch gekennzeichnet, dass** die Basisstruktur (4) und die Abdeckstruktur (6) jeweils eine gemischtzellige Porenstruktur mit geschlossener Außenhaut aufweisen.

5. Moosgummiprofil nach Anspruch 4, **dadurch gekennzeichnet, dass** die mittlere Porengröße der Poren der Abdeckstruktur (6) geringer ist als die mittlere Porengröße der Poren der Basisstruktur (4).

## Claims

1. Cellular rubber profile consisting of a carbon black particle-containing base structure (4) and a foot section (16), between which a connecting section (14) is located, wherein the profile is formed in the manner of a sealing profile (10) for sealing two co-operating bodies, namely for sealing light housings with respect to their closure plates, wherein the foot section (16) is intended for insertion into a mounting groove, is formed substantially symmetrical to a central plane (22) extending in the longitudinal extension of the profile and is provided with projections (34, 36) forming respective holding strips, **characterised by** a non-black overlay structure (6) which contains colouring particles, which is produced by coextrusion together with the base structure (4) and which engages in a cap-like manner over the base structure (4), the layer thickness of which overlay structure is selected to be 1.0mm to 3.0mm, wherein the width of the connecting section (14) at its narrowest point is about 38% of the greatest width of the sealing section (12) and wherein the height of the sealing section (12) is about 65% of the total height of the sealing profile (10).

2. Cellular rubber profile as claimed in claim 1, **characterised in that** the base structure (4) has a hardness of 10 to 25 Shore A.

3. Cellular rubber profile as claimed in any one of claims 1 and 2, **characterised in that** the base structure (4) has a hardness of preferably 20 Shore A and that the thickness of the overlay structure (6) is preferably 1.5mm.

4. Cellular rubber profile as claimed in any one of claims 1 to 3, **characterised in that** the base structure (4) and the overlay structure (6) each have a mixed cell pore structure with a closed skin.

5. Cellular rubber profile as claimed in claim 4, **characterised in that** the average pore size of the pores of the overlay structure (6) is smaller than the average pore size of the pores of the base structure (4).

## Revendications

1. Profil en caoutchouc spongieux, consistant en une structure de base (4) contenant des particules de noir de carbone, et une partie d'embase (16), parties entre lesquelles se trouve une partie de liaison (14), le profil étant formé à la façon d'un profil de joint (10) pour rendre étanche deux corps coopérants, à savoir pour rendre étanche un boîtier de luminaire par rapport à ses vitres de fermeture, la partie d'embase (16) servant à l'insertion dans une rainure de montage étant essentiellement symétrique par rapport à un plan médian (22) et étant pourvue de parties en saillie (34, 36) servant de nervures de retenue, **caractérisé par** une structure de recouvrement (6) non noire contenant des particules de couleur, recouvrant la structure de base (4) à la façon d'une coiffe et produite par co-extrusion avec la structure de base (4), l'épaisseur de couche de la structure de recouvrement se situant entre 1,0 et 3,0 mm, la largeur de la partie de liaison (14) à l'endroit le plus mince étant d'environ 38% de la plus grande largeur de la partie de joint (12), et la hauteur de la partie de joint (12) étant d'environ 65% de la hauteur totale du profil de joint (10).

2. Profil en caoutchouc spongieux selon la revendication 1, **caractérisé en ce que** la structure de base (4) présente une dureté comprise entre 10 et 25 Shore A.

3. Profil en caoutchouc spongieux selon l'une des revendications 1 ou 2, **caractérisé en ce que** la structure de base (4) présente de préférence une dureté de 20 Shore A et que l'épaisseur de la structure de recouvrement (6) est de préférence de 1,5 mm.

4. Profil en caoutchouc spongieux selon l'une des revendications 1 à 3, **caractérisé en ce que** la structure de base (4) et la structure de recouvrement (6) comprennent chacune une structure de pores à cellules mixtes avec une enveloppe fermée.

5. Profil en caoutchouc spongieux selon la revendication 4, **caractérisé en ce que** la grandeur moyenne des pores de la structure de recouvrement (6) est inférieure à la grandeur moyenne des pores de la structure de base (4).
